# EUROPÄISCHE PATENTSCHRIFT

(11) **EP 1 368 558 B1**
(45) Veröffentlichungstag und Bekanntmachung des Hinweises auf die Patenterteilung: **17.05.2006**
(21) Anmeldenummer: 02716834.3
(22) Anmeldetag: 15.03.2002
(51) Int. Cl.: F01N 3/28, F01N 11/00, F01N 7/00

(54) **VERFAHREN UND VORRICHTUNG ZUR HERSTELLUNG EINES WABENKÖRPERS SOWIE WABENKÖRPER**
METHOD AND DEVICE FOR PRODUCTION OF A HONEYCOMB BODY AND HONEYCOMB BODIES
PROCEDE ET DISPOSITIF DE FABRICATION D'UN CORPS ALVEOLAIRE ET CORPS ALVEOLAIRE CORRESPONDANT

(30) Priorität: 16.03.2001 DE 10112678; 01.03.2002 DE 10208871
(43) Veröffentlichungstag der Anmeldung: 10.12.2003
(73) Patentinhaber: Emitec Gesellschaft für Emissionstechnologie mbH, 53797 Lohmar (DE)
(72) Erfinder: BRÜCK, Rolf, 51429 Bergisch Gladbach (DE)
(74) Vertreter: Kahlhöfer, Hermann
(86) Internationale Anmeldenummer: PCT/EP2002/002919
(87) Internationale Veröffentlichungsnummer: WO 2002/075126

(56) Entgegenhaltungen:
- DE-U- 8 816 154
- GB-A- 1 452 982
- US-A- 5 307 626
- PATENT ABSTRACTS OF JAPAN vol. 013, no. 183 (M-820), 28. April 1989 (1989-04-28) & JP 01 012018 A (TOYOTA MOTOR CORP), 17. Januar 1989 (1989-01-17)

## Beschreibung

Die Erfindung bezieht sich auf ein Verfahren und eine Vorrichtung zur Herstellung von Wabenkörpern sowie auf einen Wabenkörper.

Im Automobilbau finden Wabenkörper, deren grundsätzliche Bauweise beispielsweise aus der EP 0 245 737 B1, der EP 0 430 945 B1 und der GB 1,452,982 bekannt sind, vielfältige Anwendung, vor allem werden sie als Katalysator-Trägerkörper in der Abgasaufbereitung eingesetzt. Im Zuge von durch den Gesetzgeber immer weiter herabgesetzten Grenzwerten für erlaubte Schadstoffkonzentrationen im an die Umwelt abgegebenen Abgas eines Automobils werden Verfahren, die eine Regelung des Abgasaufbereitungsprozesses ermöglichen, immer wichtiger. Die zu einer solchen Regelung nötigen Messfühler, die es gestatten, beispielsweise die Abgaszusammensetzung oder auch Schadstoffkonzentrationen im Abgas zu messen, sind ein wesentlicher Bestandteil einer geregelt betriebenen Abgasaufbereitungsanlage. Dadurch bedingt sind Wabenkörper, die die Aufnahme eines oder mehrerer Messfühler gestatten, der Daten für eine Regelung der katalytischen Aufbereitung bereitstellt, wie zum Beispiel aus der DE 8816 154 U1 bekannt, ein wichtiges Element von geregelt betriebenen Abgasaufbereitungsanlagen.

Aus der JP 01-012018 ist ein Trägerkörper aus einer glatten und einer gewellten metallischen Lage bekannt, bei der Löcher zur Aufnahme eines Sensors in die glatte und in die gewellte Lage nach Übereinanderlegen dieser Lagen gebohrt werden.

Als Messfühler kommen beispielsweise Sonden, die zur Bestimmung der Abgaszusammensetzung dienen, wie etwa Lambda-Sonden, sowie Kohlenwasserstoff sensoren (HC-Sensoren), die den Kohlenwasserstoffgehalt des Abgases messen, in Frage. Beim Einbau eines solchen Messfühlers beispielsweise in einen als Katalysator-Trägerkörper dienenden aus strukturierten Blechen aufgebauten Wabenkörper sind unterschiedliche Probleme bekannt Zum einen ist es zumindest für bestimmte Bauformen möglich, alle Blechlagen, die zu einem Wabenkörper auf- gewickelt werden, in einem für alle Blechlagen gleichen Bereich vor dem Wickeln mit einer Aussparung zu versehen. Dies gestattet das Einbringen eines Messfühlers nach dem Wickeln in diesem Bereich, hat jedoch den Nachteil, dass das durch die Aussparungen gebildete freie Volumen, dass zur Aufnahme des Messfühlers dient, deutlich größer ist als das Volumen des Messfühlers, der in den Wabenkörper eingebracht wird. Dies führt zu einem Verlust von wirksamer Oberfläche in dem Wabenkörper, welche beispielsweise eine katalytisch aktive Beschichtung aufweisen kann. Dies führt zu einer verschlechterten Effektivität des Wabenkörpers.

Eine weitere Möglichkeit besteht darin, nach dem Wickeln des Wabenkörpers in diesen ein Loch z.B. zu bohren. Dieses Verfahren hat verschiedene Nachteile. Zum einen kann ein solcher Verfahrensschritt nicht innerhalb der generell schon vorhandenen Arbeitsschritte eingefügt werden. Vielmehr liegt ein zusätzlicher, nachträglich durchzuführender Arbeitsschritt vor. Dies führt zu deutlich höheren Produktionskosten bei der Herstellung von Wabenkörpern dieser Art. Zudem kann es, falls bereits eine katalytisch aktive Beschichtung aufgetragen wurde, beim Herstellen des Loches dazu kommen, dass die katalytisch aktive Schicht von den verwendeten Blechlagen abplatzt. Auch dies vermindert die Effizienz des Wabenkörpers im Einsatz. Schließlich führt das Bohren je nach dem dazu benutzten Verfahren auch zu einer teilweisen Verstopfung von Kanälen. Daher ist diese Methode, die grundsätzlich auch ein Einbringen von Messfühlern in keramische Wabenkörper erlauben würde, nicht problemlos nutzbar.

Hiervon ausgehend ist es Aufgabe der Erfindung, ein Verfahren und eine Vorrichtung zur Herstellung eines Wabenkörpers mit einem freien durchgängigen Volumen in seinem Inneren vorzuschlagen, dessen Herstellungskosten im Vergleich zu nach den oben angegebenen Methoden hergestellten reduziert sind und bei dem die wirksame Oberfläche nicht unnötig verkleinert ist.

Diese Aufgabe wird gelöst durch ein Verfahren mit den Merkmalen des Anspruchs 1, sowie Vorrichtung mit den Merkmalen des Anspruchs 11. Vorteilhafte Ausgestaltungen und Weiterbildungen sind Gegenstand der jeweiligen abhängigen Ansprüche.

Das erfindungsgemäße Verfahren dient zum Herstellen eines Wabenkörpers aus einer vorgegebenen Zahl Blechlagen von mindestens einer Vorratsrolle, von denen zumindest ein Teil zumindest teilweise strukturierte Blechlagen sind, deren Struktur den Wabenkörper für ein Fluid durchströmbar macht Der Wabenkörper weist in seinem Inneren ein vorgegebenes freies Volumen für einen Messfühler auf.

Das Verfahren umfasst die folgenden Schritte:
a) Auswählen eines Abschnittes eines Blechbandes von der Vorratsrolle für eine Blechlage entsprechender Größe;
b) Identifizierung der Blechlage und Auslesen mindestens einer zugehörigen Lochposition und mindestens eines zugehörigen Lochrands aus einem Speicher;
c) Erstellen mindestens eines Loches mit dem Lochrand in der Blechlage an der mindestens einen bestimmten Lochposition;
d) Gegebenenfalls Strukturieren zumindest eines Teil des Abschnitts;
e) Gegebenenfalls Trennen des Abschnittes von der Vorratsrolle
f) Wiederholung von Schritt a) bis e), bis die vorgegebene Zahl von Blechlagen erreicht ist
g) Gegebenenfalls Stapeln der vorgegebenen Zahl von Blechlagen entsprechend der Identifikation der einzelnen Blechlagen;
h) Gegebenfalls Wiederholung der Schritte a) bis g )zur Herstellung von mehreren Stapeln.
i) Wickeln der mindestens einen Blechlage bzw. des mindestens einen Blechstapels zu einer Wabenstruktur;
j) Einbringen der Wabenstruktur in ein Mantelrohr; und
k) Einbringen des Messfühlers an einer vorgegebenen Position in die Wabenstruktur und das Mantelrohr.

Bei diesem Verfahren können die Schritte b), c), d) und e) in beliebiger Reihenfolge durchgeführt werden.

Betrachtet man als Beispiel eine strukturierte Blechlage, bevorzugt eine gewellten Blechlage, so ist es also möglich, zuerst eine entsprechende Lochung der Blechlage vorzunehmen und daran anschließend die Lage zu strukturieren, es ist jedoch auch möglich zuerst eine strukturierte Blechlage herzustellen und diese daran anschließend zu lochen.

Das Verfahren gestattet ferner den Aufbau von Wabenkörpern aus einem einzigen oder mehreren Blechen, sowie den Aufbau von Wabenkörpern aus einem oder mehreren Stapeln von Blechlagen. Es ist erfindungsgemäß auch möglich, den Wabenkörper aus einem einzigen zumindest teilweise strukturierten Blech aufzubauen.

Die Identifikation der Blechlage kann einfach dadurch erfolgen, dass beim Produktionsprozess bekannt ist, wo der gerade zu bearbeitende Abschnitt des Blechbandes später im Wabenkörper liegen wird. Dies kann beispielsweise durch eine automatische Vorrichtung zum Abzählen der hergestellten Blechlagen erfolgen, bei der die Blechlagen nacheinander in Bezug auf ihre Lage im Wabenkörper nach dem Wickeln "von innen nach außen" bearbeitet werden, wobei auch andere Lösungen möglich und erfindungsgemäß sind. In jedem Fall ermöglicht das Registrieren der Produktionsschritte und der Bewegung der Blechlage eine Identifikation der Blechlage.

Die im Speicher abgelegten Lochpositionen und zugehörigen Lochränder sind Blechlagen-spezifisch. Wenn eine der n zur Herstellung des Wabenkörper benötigten Blechlagen als Blechlage N1 identifiziert ist, kann aus dem Speicher der zu dieser Blechlage N1 gehörige mindestens eine Lochrand und die mindestens eine Lochposition ausgelesen werden. Ähnliches gilt für alle folgenden Blechlagen N2, N3, N4...., Nn Ein Lochrand ist eine in einem relativ zur Lochposition bestimmten Koordinatensystem geschlossene Kurve.

Eine Ausgestaltungsform ist es, die Lochränder für jede Blechlage Ni unterschiedlich zu gestalten, während in einer anderen Ausgestaltung ein identischer Lochrand für alle Blechlagen verwendet wird. Die Lochpositionen können auch außerhalb des identifizierten Abschnitts des Blechbandes liegen, dies bedingt, dass eine Lochung des Abschnitts nicht erfolgt. Weiterhin kann es vorkommen, dass mehrere Lochpositionen pro Abschnitt vorhanden sind. Genauso kann es möglich sein, dass der Abschnitt mehrere, zum Teil auch nur teilweise ausgebildete Löcher aufweisen soll. Dies hängt zum Beispiel von der Bauform des Wabenkörper und weiteren Parametern wie der Zelldichte, d.h. der Zahl der Zellen pro Querschnittsflächeneinheit, ab. Alle diese Informationen sind in geeigneter Art und Weise im Speicher gespeichert und können aus diesem abgerufen werden.

Der Verfahrensschritt des Strukturierens kann nicht nur reines Wellen umfassen, vielmehr gibt es auch erfindungsgemäße Ausführungsformen, bei denen die zu strukturierenden Blechlage mit Primär- und Sekundärstrukturen versehen werden oder mehrere Wellschritte nacheinander durchgeführt werden, um beispielsweise ganz bestimmte Wellenformen zu erhalten.

Es ist beispielsweise auch vorteilhaft, einen Abschnitt eines Bleches nur teilweise zu strukturieren, so dass ein Blechband entsteht, das beispielsweise zur einen Hälfte gewellt ist und zur anderen Hälfte Glattlagen darstellt. Aus einem solchen Blechband lässt sich beispielsweise in einfacher Art und Weise ein spiralförmig aufgebauter Wabenkörper mit einer Vielzahl von Blechlagen wickeln.

Durch eine geeignete Kombination von glatten und strukturierten Lagen können Blechstapel hergestellt werden, die zu Wabenkörpern gewickelt werden können. Nachdem die Blechlagen bzw. die entsprechenden Blechstapel zu einer Wabenstruktur gewickelt wurden, können sie in ein Mantelrohr eingebracht werden.

Zur Verbindung der Blechlagen untereinander, sowie zur Verbindung des Mantelrohrs mit der Wabenstruktur können verschiedene Verbindungsschritte vorgesehen sein, beispielsweise Löten. Hierzu kann es notwendig sein, durch entsprechende Verfahren wie beispielsweise Beleimen, Beloten und Auftragen einer Passivierungsschicht, eine entsprechende Lotverteilung auf den Blechlagen zu gewährleisten, so dass beim Löten eine stabile Verbindung zwischen den einzelnen Blechlagen, sowie zwischen Wabenstruktur und Mantelrohr entsteht. Auch eine Verbindung durch Schweißen ist möglich.

Gemäß einer vorteilhaften Ausgestaltung des Verfahrens werden die Lochpositionen und Lochränder in den jeweiligen Blechlagen so gewählt, dass im Wabenkörper ein zusammenhängender Hohlraum entsteht, dessen freies Volumen im wesentlichen mindestens dem in den Wabenkörper eingebrachten Volumen des Messfühlers entspricht. Dies ermöglicht in vorteilhafter Weise die Herstellung von einen Messfühler aufweisenden Wabenkörpern, die einen geringen Verlust an effektiver Oberfläche aufweisen.

Gemäß einer weiteren vorteilhaften Ausgestaltung des Verfahrens sind die Abmessungen des mindestens einen Lochs in einer Blechlage um einen vorgegebenen Toleranzwert größer als die Projektion des Querschnitts des Messfühlers auf die entsprechende Blechlage. Dies gestattet die Berücksichtigung von Produktionstoleranzen. Somit ist auch bei vorhandenen Produktionstoleranzen eine problemlose Einbringung des Messfühlers in den Wabenkörper möglich.

Gemäß einer noch weiteren vorteilhaften Ausgestaltung des Verfahrens werden die gespeicherte Lochposition und/oder der gespeicherte Lochrand für jede Blechlage aus der Projektion des Querschnitts des Messfühlers auf die Blechlage im gewickelten Zustand bestimmt. Dies gestattet in vorteilhafter Weise eine sehr genaue Bestimmung der nötigen Lochrandformen zur Erzeugung eines freien Volumens zur Aufnahme des Messfühlers.

Die Lochposition und/oder der Lochrand kann vor der Speicherung aus einer mathematischen Modellrechnung hergeleitet werden. Dies gestattet bei einmal bekannter Identifikation der Blechlagen, also bei bekannter relativer Position der Blechlage nach dem Wickeln, die Berechnung von Lochposition und Lochrändern von verschiedenen Sensoren an verschiedenen Positionen innerhalb des Wabenkörpers.

Gemäß einer noch weiteren vorteilhaften Ausgestaltung des Verfahrens werden die Lochposition und/oder der Lochrand für jede Blechlage vor Speicherung aufgrund empirischer Werte bestimmt. Dies gestattet in vorteilhafter Weise die Bestimmung von Lochformen und Lochpositionen, auch wenn kein mathematisches Modell zur Beschreibung des entsprechenden Wabenkörpers besteht.
Gemäß einer noch weiteren vorteilhaften Ausgestaltung des Verfahrens werden die gespeicherten Werte für die Lochposition und/oder den Lochrand aufgrund der tatsächlich vorliegenden Toleranzwerte zwischen Messfühler und freiem Volumen angepasst. Dies ermöglicht eine direkte Rückkopplung zum Produküonsprozess in Abhängigkeit von z.B. chargenabhängigen Produktionstoleranzen. So ist es möglich, bereits während des Produktionsprozesses in einer direkten Rückkopplung Materialverlust und Verlust an effektiver Oberfläche zu verringern.

Gemäß einer noch weiteren vorteilhaften Ausgestaltung des Verfahrens werden die Löcher so gebildet, dass der Querschnitt des freien Volumens das Einbringen eines Messfühlers von im wesentlichen kreisförmigem, ovalem oder mehreckigem, bevorzugt ovalem oder viereckigem Querschnitt ermöglicht. Besonders bevorzugt wird in diesem Zusammenhang, dass die Lochform im wesentlichen oval ist. Dies trägt der Krümmung der Blechlagen im fertigen Wabenkörper Rechnung.

Gemäß einer noch weiteren vorteilhaften Ausgestaltung des Verfahrens werden als Messfühler eine Lambda-Sonde oder ein HC-Sensor, bevorzugt eine Lambdä-Sonde eingebracht. Dies gestattet in vorteilhafter Weise die Herstellung von Katalysatoren, die eine integrierte Lambda-Sonde oder einen integrierten HC-Sensor aufweisen, die bei der Regelung zum Beispiel eines Abgasreinigungssystems eingesetzt werden können.

Gemäß dem erfindungsgemäßen Gedanken wird eine Vorrichtung vorgeschlagen, die zum Herstellen von Wabenkörpern mit einem freien Volumen zur Aufnahme eines integrierten Messfühlers dient. Diese Wabenkörper werden aus einem oder mehreren Blechen, von denen zumindest ein Teil zumindest teilweise so strukturiert ist, dass deren Struktur den Wabenkörper für ein Fluid durchströmbar macht, hergestellt. Die Vorrichtung weist eine Identifikationseinheit zur Identifizierung eines Abschnitts des Bleches, der später eine bestimmte Blechlage bildet, in Bezug auf seine spätere Lage im Wabenkörper auf, einen Speicher zur Speicherung mindestens eines Lochrandes und mindestens einer Lochposition für jede einzelne Blechlage in dem Wabenkörper, eine Locheinheit mit einem Lochwerkzeug, ggf. Strukturier- und Reduktionswerkzeuge und eine Stapel- oder Wickeleinheit auf Der Speicher und die Locheinheit sind über Signalleitungen zur Übertragung des mindestens einen Lochrands und der mindestens einen Lochposition verbunden.

Die Vorrichtung gestattet in vorteilhafter Weise die Herstellung von ein freies Volumen zur Aufnahme eines Messfühlers aufweisenden Wabenkörpern. Die Identifikationseinheit identifiziert die Blechlagen in Bezug auf ihre spätere Position im Wabenkörper im gewickelten Zustand. Der Speicher enthält die Blechlagen-spezifischen Lochformen und Lochpositionen, diese werden über Signalleitungen an eine Locheinheit übermittelt, die dann mit dem Lochwerkzeug die Erstellung der Löcher an den entsprechenden Positionen mit den entsprechenden Lochrändern vornimmt.

Gemäß einer vorteilhaften Ausgestaltung der Vorrichtung sind die Lochpositionen und/oder die Lochränder aus der Schnittfläche des Messfühlers mit den Blechlagen im gewickelten Zustand bestimmt Dies ermöglicht in einfacher Weise die Bestimmung und Abspeicherung der entsprechenden Lochpositionen und Lochränder für jede individuelle Blechlage und gestattet so die Herstellung eines Wabenkörpers mit einem durchgängigen freien Volumen, das im wesentlichen dem in den Wabenkörper eingebrachten Volumen des Messfühlers entspricht. Besonders bevorzugt ist in diesem Zusammenhang ein Messfühler mit einem kreisförmigen, ovalen oder mehreckigen, bevorzugt ovalen oder viereckigen Querschnitt.

Gemäß einer weiteren vorteilhaften Ausgestaltung der Vorrichtung weist das Lochwerkzeug Mittel zur Erzeugung eines im wesentlichen ovalen Querschnitts auf. Hierdurch wird dem gebogenen Charakter der Blechlagen im gewickelten Zustand Rechnung getragen.

Weiterhin ist ein Wabenkörper, möglich der nach dem erfindungsgemäßen Verfahren oder unter Verwendung der erfindungsgemäßen Vorrichtung hergestellt wurde.

Gemäß einer vorteilhaften Ausführung eines solchen Wabenkörpers ist der Messfühler in den in Strömungsrichtung ersten 50% der Längsausdehnung des Wabenkörpers (7), bevorzugt in den ersten 30%, besonders bevorzugt in den ersten 15% ausgebildet. Bei der Positionierung eines Messfühlers zur Regelung einer Abgasreinigungsanlage mit einem Wabenkörper ist einerseits zu gewährleisten, dass die Regelung möglichst schnell erfolgen kann, während andererseits der Messfühler vor Beschädigung geschützt werden muss. Bei beispielsweise Verwendung einer Lambda-Sonde würde eine möglichst motornahe Anbringung der Lambda-Sonde zwar einerseits gewährleisten, dass eine sehr schnelle Regelbarkeit der Abgasreinigungsanlage besteht, andererseits würde eine Anbringung vor dem ersten Wabenkörper die Lambda-Sonde der Gefahr einer Beschädigung aussetzen, da gerade beim Kaltstart eventuell im Abgas vorhandene Wassertröpfchen zu einer Beschädigung der Lambda-Sonde, dem sogenannten Wasserschlag, führen können. Von daher ist eine Anbringung der Lambda-Sonde im vorderen Bereich des Wabenkörpers vorteilhaft, da hier die Gefahr eines Wasserschlags vermieden wird. Eventuell vorhandene Wassertröpfchen treffen auf den Wabenkörper und verdampfen dort. Selbst während der Kaltstartphase hat der Wabenkörper sehr schnell eine so hohe Temperatur gerade auch im Stirnbereich erreicht, dass es zu einer Verdampfung der Wassertropfen kommen kann. Ansonsten werden Wassertröpfchen zumindest absorbiert oder ihr Aufschlag gedämpft.

Gemäß einer weiteren vorteilhaften Ausgestaltung des Wabenkörpers beträgt die Eindringtiefe des Messfühlers in den Wabenkörper weniger als 25% des Durchmessers des Wabenkörpers, bevorzugt weniger als 20%. Dies gestattet in vorteilhafter Weise die Einbringung eines Messfühlers, der eine effektive Regelung einer den Wabenkörper enthaltenden Abgasreinigungseinrichtung bei gleichzeitigem, möglichst geringen Verlust an effektiver Oberfläche des Wabenkörpers ermöglicht.

Gemäß einer noch weiteren vorteilhaften Ausgestaltung des Wabenkörpers ist der Messfühler eine Lambda-Sonde oder ein HC-Sensor. Die Verwendung einer Lambda-Sonde oder eines Kohlenwasserstoffssensors ermöglicht in vorteilhafter Weise die Regulierung der Abgasreinigungseinrichtung im Abgasstrang eines Verbrennungsmotors beispielsweise eines Automobils. Besonders der Einsatz einer Lambda-Sonde in einem solchen System hat sich bewährt und ist bevorzugt.

Die Neowendung eines nach dem erfindungsgemäßen Verfahren und/oder mittels einer erfindungsgemäBen Vorrichtung hergestellter Wabenkörpers als Katalysator- Trägerkörper im Abgasstrang eines Verbrennungsmotors, insbesondere dem eines Personenkraftwagens, ist möglich.

Weitere Vorteile und besonders bevorzugte Ausgestaltungen der Erfindung werden nachfolgend anhand der Zeichnung näher erläutert, wobei die Erfindung nicht auf die dargestellten Ausführungsformen beschränkt ist

Es zeigen:
- Fig. 1: schematisch ein Ausführungsbeispiel einer erfindungsgemäßen Vorrichtung;
- Fig. 2: ein Beispiel eines erfindungsgemäßen gelochten Blechbandes mit zwei Abschnitten;
- Fig. 3: schematisch im Schnittbild einen Ausschnitt aus einem erfindungsgemäßen Wabenkörper, und
- Fig. 4: schematisch erfindungsgemäßen Wabenkörper; und

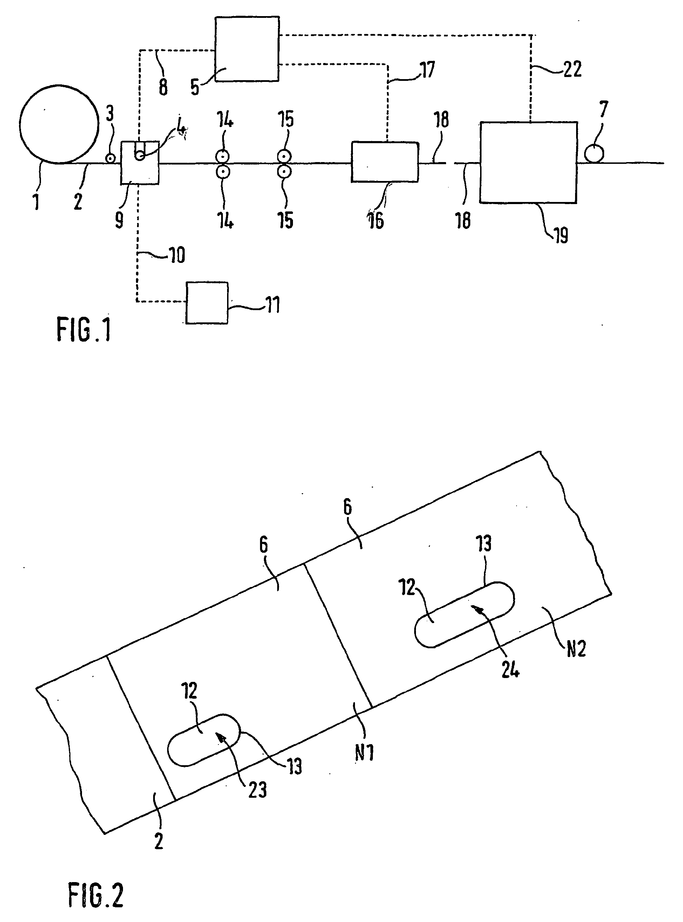

Fig. 1 zeigt ein Ausfuhnmgsbeispiel eines erfindungsgemäßen Verfahrens bzw. einer erfindungsgemäßen Vorrichtung. Von einer Vorratsrolle 1 wird ein Blechband 2 abgewickelt. Durch geeignete Mittel, beispielsweise ein Laufrad 3 direkt vor einer oder im Eingangsbereich einer Locheinheit 9, die über nicht gezeigte Signalleitungen mit einer Identifikationseinheit 5 verbunden sind, kann in der Identifikationseinheit 5 im Zusammenhang mit weiteren Informationen aus dem Produktionsprozess, wie zum Beispiel der benötigten Zahl n von Blechlagen, die identisch mit einem entsprechenden Abschnitt 6 des Blechbandes 2 sind, bestimmt werden, wo sich der jeweils gerade bearbeitete Abschnitt 6 des Blechbandes 2 später im Wabenkörper 7 nach dem Wickeln befinden wird. Der Abschnitt 6 des Blechbandes 2 wird als Abschnitt N1 identifiziert. Die Begriffe Abschnitt und Blechlage sind im wesentlichen synonym. Ein bestimmter Abschnitt des Blechbandes wird im Laufe der weiteren Produktion zu einer bestimmten Blechlage in einem Wabenkörper aus vielen Blechlagen. Ob die Blechlagen einzelne Bleche sind, also die Abschnitte im Verlauf der Fertigung getrennt werden, oder, wie z.B. bei einem spiralförmig gewickelten Wabenkörper, zusammenhängend bleiben, hängt von der Bauform des Wabenkörpers ab.

Diese Identifikation des gerade bearbeiteten Abschnitts 6 des Blechbandes 2 wird über die erste Signalleitung 8 an die Locheinheit 9 übertragen. Über eine zweite Signalleitung 10 ist die Locheinheit 9 mit einem Speicher 11 verbunden, sie kann so den zu dem identifizierten Abschnitt N1 gehörigen Koordinatensatz, bestehend aus mindestens einer Lochposition 12 und mindestens einem Lochrand 13 auslesen. Jeder Lochrand 13 besteht aus einer geschlossenen Kurve, gemessen in Koordinaten relativ zur zugehörigen Lochposition 12.

Je nach Art des Wabenkörpers, also zum Beispiel abhängig von Bauform, Zelldichte und/oder Durchmesser des Wabenkörpers gibt es für jeden der Ni Abschnitte 6, die zum Wabenkörper 7 gewickelt werden, unterschiedliche Koordinatensätze aus Lochpositionen 12 und Lochrändern 13. So ist es möglich, dass ein Abschnitt 6 mit keinem Loch oder einem oder mehreren Löchern, die zumindest teilweise auch nur zum Teil ausgebildet sein können, versehen werden muss. Die sich aus diesen Koordinatensätzen ergebende Lochung wird von der Locheinheit 9 durch ein oder mehrere Lochwerkzeuge 4 durchgeführt. Ein Lochwerkzeug 4 kann ein Stanzwerkzeug sein, jedoch ist auch die Verwendung kann ein Stanzwerkzeug sein, jedoch ist auch die Verwendung von Schneid- und Fräswerkzeugen, wie zum Beispiel einem Laserschneidwerkzeug, möglich und erfindungsgemäß.

Nach Verlassen der Locheinheit 9 kann gegebenenfalls durch ein Strukturierwerkzeug 14 eine zumindest teilweise Strukturierung des Abschnitts 6 erfolgen. Die Strukturierung kann zum Beispiel aus Wellen bestehen, jedoch sind auch andere Strukturen möglich. Es ist auch möglich, mehrere Strukturierwerkzeuge 14 zu benutzen, die dann beispielsweise Primär- und Sekundärstrukturen unterschiedlicher Amplitude ausbilden, oder die dem Abschnitt 6 auch besondere, nicht mit einem Strukturierwerkzeug 14 herzustellende Strukturformen aufprägen können. In jedem Fall ist es möglich, die Amplitude der Struktur durch ein Reduktionswerkzeug 15 zu reduzieren. Bei der Herstellung von glatten Blechlagen wird auf den Einsatz der Strukturierwerkzeuge 14 verzichtet.

Die Trenneinheit 16 trennt gegebenenfalls den Abschnitt 6 vom Blechband 2 ab. Die Trenneinheit 16 ist über eine dritte Signalleitung 17 mit der Identifikationseinheit 5 verbunden. Die vierte Signalleitung 17 kann zum wechselseitigen Datenaustausch zwischen Identifikationseinheit 5 und Trenneinheit 16 genutzt werden, so dass auch der aktuelle Betriebszustand der Trenneinheit 16 zur Identifizierung des gerade aktuell bearbeiteten Abschnitts 6 des Blechbandes 2 herangezogen werden kann. Durch die Rückkopplung zur Identifikationseinheit 5 werden die einzelnen Produktionsschritte in den unterschiedlichen Einheiten und Werkzeugen 9, 14, 15, 16, 19 synchronisiert, so dass bei jedem Produktionsschritt bekannt ist, in welcher Einheit 9, 14, 15, 16, 19 sich welcher Abschnitt Ni befindet.

Nach der Abtrennung des Abschnitts 6 vom Blechband 2 ergibt sich eine Blechlage 18, die sowohl glatt, als auch zumindest teilweise strukturiert sein kann, je nach Einsatz der Strukturierwerkzeuge 14 an diesem Abschnitt 6.

Nach Verlassen des Trennwerkzeugs 16 erreichen die Blechlagen 18 eine Stapel- und Wickeleinheit 19. In dieser werden mehrere Abschnitte N1, N2, N3.... wenn für den herzustellenden Wabenkörpertyp nötig zu Blechstapeln gestapelt. Darauffolgend werden dann n Blechlagen 18 oder Abschnitten 6, bzw. eine vorgegebene Zahl von Blechstapeln zu einer Wabenstruktur 20 gewickelt, die gegebenenfalls mit einem Mantelrohr 21 versehen wird und dann durch geeignete Verbindungsmaßnahmen zum Wabenkörper 7 verbunden wird. Der Wabenkörper 7 verlässt die Stapel- und Wickeleinheit 19. Auch die Stapel- und Wickeleinheit 19 ist über eine vierte Signalleitung 22 mit der Identifikationseinheit 5 verbunden. So können die Daten der aktuellen Situation in der Stapel- und Wickeleinheit 19 zur Identifizierung des gerade bearbeiteten Bauteils verwendet werden. So können zum Beispiel die Zahl Nk der bereits in der Stapel- und Wickeleinheit 19 vorhandenen Blechlagen 18 zur Identifikation benutzt werden.

Dieses Verfahren wird für alle Blechlagen 18, also für die Blechlagen N1, N2, N3, ... durchgeführt, bis die n korrekten Blechlagen 18 bzw. Blechstapel in der Stapel- und Wickeleinheit 19 vorhanden sind, worauf eine Wabenstruktur 20 gewickelt und mit einem Mantelrohr 21 zu einem Wabenkörper 7 verbunden wird.

Erfindungsgemäß kann von der hier gewählten Reihenfolge von gegebenenfalls Strukturieren, bevorzugt Wellen, Bestimmung von Lochform und Lochposition, Lochen und gegebenenfalls Trennen abgewichen werden. Jede beliebige Kombination von gegebenenfalls Strukturieren, bevorzugt Wellen, Bestimmung von Lochform und Lochposition, Lochen und gegebenenfalls Trennen ist möglich und erfindungsgemäß.

Fig. 2 zeigt ein erfindungsgemäß gelochtes Blechband 2. Zu erkennen sind zwei Abschnitte 6, die als Abschnitt N1 und Abschnitt N2 identifiziert wurden. Der Abschnitt N1 enthält ein erstes Loch 23, der Abschnitt N2 enthält ein zweites Loch 24. Diese sind jeweils durch eine Lochposition 12 und einen relativ dazu definierten Lochrand 13 definiert ist.

Die Lochpositionen 12 und die Lochränder 13 wurden nach der Identifikation der Abschnitte N1, N2 durch die Identifikationseinheit 5 durch die Locheinheit 9 aus dem Speicher 11 ausgelesen. Das Lochwerkzeug 4 der Locheinheit 9 hat in jedem Abschnitt N1, N2 die entsprechenden Löcher 23, 24 erzeugt, beispielsweise ausgestanzt oder ausgeschnitten.

Die Lochpositionen 12 und Lochränder 13 in den unterschiedlichen Abschnitten N1 und N2 bzw. gegebenenfalls späteren Blechlagen N1 und N2 und weiterer Abschnitte Ni sind so bestimmt, dass sich im gewickelten Wabenkörper 6 ein zusammenhängendes freies Volumen 25 bildet.

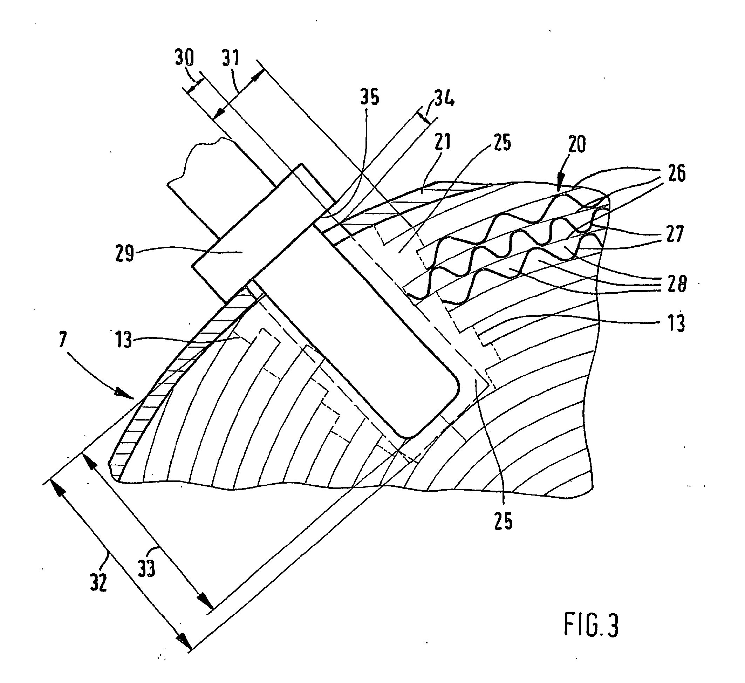

Fig. 3 zeigt einen Wabenkörper 7 mit einer Wabenstruktur 20 und einem Mantelrohr 21. Die Wabenstruktur 20 ist aus Glattlagen 26 und Welllagen 27, die der Übersichtlichkeit halber nur teilweise eingezeichnet sind, aufgebaut, die für ein Fluid durchströmbare Kanäle 28 bilden. In den Wabenkörper 7 ist ein Messfühler 29 in das freie Volumen 25, das durch die - exemplarisch mit Bezugszeichen versehenen - Lochränder 13 begrenzt ist, eingelassen. Das freie Volumen 25 ist etwas größer als das eingelassene Volumen des Messfühlers 29, da um eventuell auftretende Produktionstoleranzen auszugleichen, die Ausdehnung des Lochrands 13 etwas größer ist als der entsprechende Querschnitt des Messfühlers 29. Dies führt zu einer nicht fluchtenden Begrenzung des freien Volumens, die Begrenzung ist vielmehr stufig, da beispielsweise ein erster Toleranzwert 30 und ein zweiter Toleranzwert 31 vorliegen. Auch die Lochtiefe 32 ist entsprechend etwas größer als die versenkte Länge 33 des Messfühlers 29.

Der hier gezeigte schräge Einbau des Messfühlers 29 führt zu einem dritten Toleranzwert 34 zwischen der Anlagefläche 35 des Messfühlers 29 und dem Mantelrohr 21. Bei einem - erfindungsgemäß auch möglichen - geraden Einbau des Messfühlers 29 in den Wabenkörper 7 würde dieser dritte Toleranzwert 34 nicht auftreten.

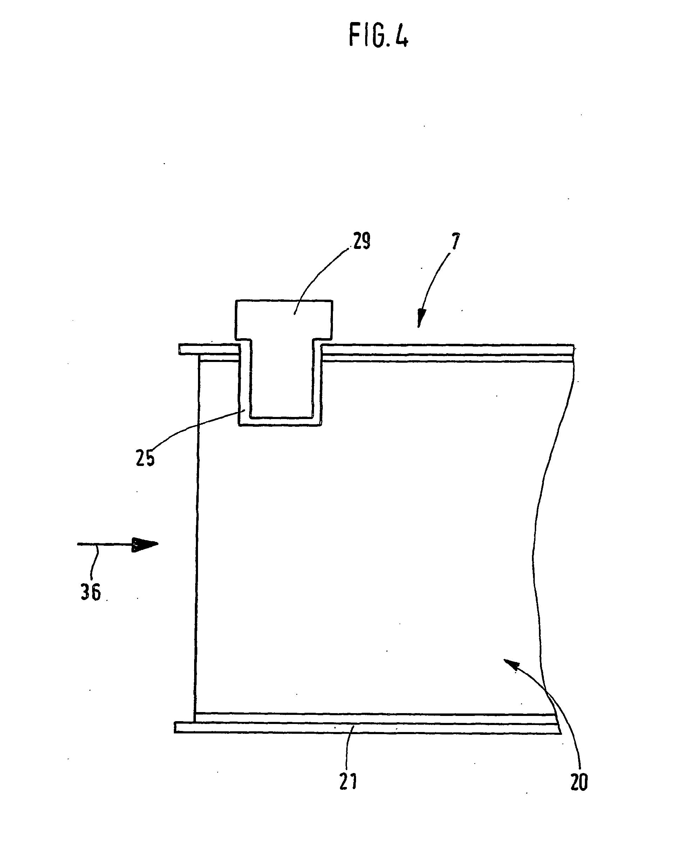

Fig. 4 zeigt einen Wabenkörper 7, der aus einem Mantelrohr 21 und einer Wabenstruktur 20 besteht und ein zusammenhängendes freies Volumen 25 aufweist, in das ein Messfühler 29, beispielsweise eine Lambda-Sonde 29, eingesetzt ist. Der Messfühler 29 ist im in Strömungsrichtung 36 vorderen axialen Bereich des Wabenkörpers 7, um die Gefahr der Zerstörung des Messfühlers 29 durch Wasserschlag zu vermindern.

### Bezugszeichenliste

- 1 Vorratsrolle: 2 Blechband
- 3 Laufrad: 4 Lochwerkzeug
- 5: Identifikationseinheit
- 6: Abschnitt
- 7: Wabenkörper
- 8: erste Signalleitung
- 9:
- 10: zweite Signalleitung
- 11: Speicher
- 12: Lochposition
- 13: Lochrand
- 14: Strukturierwerkzeug
- 15: Reduzierwerkzeug
- 16: Trenneinheit
- 17: dritte Signalleitung
- 18: Blechlage
- 19: Stapel- und Wickeleinheit
- 20: Wabenstruktur
- 21: Mantelrohr
- 22: vierte Signalleitung
- 23: erstes Loch
- 24: zweites Loch
- 25: freies Volumen
- 26: Glattlagen
- 27: Welllagen
- 28: Kanal
- 29: Messfühler
- 30: erster Toleranzwert
- 31: zweiter Toleranzwert
- 32: Lochtiefe
- 33: versenkte Länge
- 34: dritter Toleranzwert
- 35: Anlagefläche
- 36: Strömungsrichtung

- n: Zahl der in einem Wabenkörper verbauten Blechlagen
- N1, ..., Ni, ...Nn: Identifikation einer bestimmten Blechlage
- Nk: Zahl der sich bereits in der Stapel- und Wickeleinheit befindlichen Blechlagen

## Patentansprüche

1. Verfahren zum Herstellen eines Wabenkörpers (7) mit einer vorgegebenen Zahl (n) Blechlagen (18) von mindestens einer Vorratsrolle (1), von denen zumindest ein Teil zumindest teilweise strukturierte Blechlagen (18) sind, deren Struktur den Wabenkörper (7) für ein Fluid durchströmbar macht, wobei der Wabenkörper (7) in seinem Inneren ein vorgegebenes zusammenhängendes freies Volumen (25) für einen Messfühler (29) aufweist, umfassend den folgenden Ablauf:
a) Auswählen eines Abschnitts (6) eines Blechbandes (2) von der Vorratsrolle (1) für eine Blechlage (18) entsprechender Größe;
b) Identifizierung der Blechlage (18) und Auslesen mindestens einer zugehörigen Lochposition (12) und mindestens einem zugehörigen Lochrand (13) aus einem Speicher (11);
c) Erstellen mindestens eines Loches (23, 24) mit dem Lochrand (13) in der Blechlage (18) an der mindestens einen bestimmten Lochposition (12) und gegebenenfalls Strukturieren zumindest eines Teils des Abschnitts (6);
d) gegebenenfalls Trennen des Abschnitts (6) von der Vorratsrolle (1);
e) Wiederholung von Schritt a) bis d), bis die vorgegebene Zahl (n) von Blechlagen (18) erreicht ist;
f) gegebenenfalls Stapeln der vorgegebenen Zahl von Blechlagen (18) entsprechend der Identifikation der einzelnen Blechlagen (18);
g) gegebenenfalls Wiederholung der Schritte a) bis f) zur Herstellung von mehreren Stapeln;
h) Wickeln der mindestens einen Blechlage (18) bzw. des mindestens einen Blechstapels zu einer Wabenstruktur (20);
i) Einbringen der Wabenstruktur (20) in ein Mantelrohr (21); und
j) Einbringen des Messfühlers (29) an einer vorgegebenen Position in die Wabenstruktur (20) und das Mantelrohrs (21),
wobei die Schritte b), c) und d) in beliebiger Reihenfolge durchgeführt werden können.

2. Verfahren nach Anspruch 1, **dadurch gekennzeichnet, dass** die mindestens eine Lochposition (12) und der mindestens eine Lochrand (13) in den jeweiligen Blechlagen (18) so gewählt werden, dass im Wabenkörper (7) ein zusammenhängender Hohlraum entsteht, dessen Volumen (25) im wesentlichen zumindest dem in den Wabenkörper (7) eingebrachten Volumen des Messfühlers (29) entspricht.

3. Verfahren nach Anspruch 2, **dadurch gekennzeichnet, dass** die Abmessungen des mindestens einen Lochs (23, 24) in einer Blechlage (18) um einen vorgegebenen Toleranzwert größer sind als die Schnittfläche des Messfühlers (29) mit der entsprechenden Blechlage (18).

4. Verfahren nach einem der vorherigen Ansprüche, **dadurch gekennzeichnet, dass** die gespeicherte Lochposition (12) und/oder der gespeicherte Lochrand (13) aus der Schnittfläche des Messfühlers (29) mit der Blechlage (18) im gewickelten Zustand bestimmt werden.

5. Verfahren nach einem der vorherigen Ansprüche, **dadurch gekennzeichnet, dass** die Lochposition (12) und/oder der Lochrand (13) vor Speicherung aus einer mathematischen Modellrechnung hergeleitet werden.

6. Verfahren nach einem der Ansprüche 1 bis 4, **dadurch gekennzeichnet, dass** die Lochposition (12) und/oder der Lochrand (13) vor Speicherung aufgrund empirischer Werte bestimmt werden.

7. Verfahren nach einem der vorhergehenden Ansprüche, **dadurch gekennzeichnet, dass** die gespeicherten Werte für die Lochposition (12) und/oder den Lochrand (13) aufgrund der tatsächlich vorliegenden Toleranzwerte zwischen Messfühler (29) und Begrenzung des freien Volumens (25) angepasst werden.

8. Verfahren nach einem der vorhergehenden Ansprüche, **dadurch gekennzeichnet, dass** die Löcher (23, 24) so gebildet werden, dass der Querschnitt des freien Volumens (25) das Einbringen eines Messfühlers (29) von im wesentlichen kreisförmigem, ovalem oder mehreckigem, bevorzugt ovalem oder viereckigem Querschnitt ermöglicht.

9. Verfahren nach Anspruch 7, **dadurch gekennzeichnet, dass** der Lochrand (13) im wesentlichen oval ist.

10. Verfahren nach einem der vorhergehenden Ansprüche, **dadurch gekennzeichnet, dass** als Messfühler (29) eine Lambda-Sonde oder ein HC-Sensor, bevorzugt eine Lambda-Sonde eingebracht wird.

11. Vorrichtung zum Herstellen eines Wabenkörpers mit einem zusammenhängendem freien Volumen (25) zur Aufnahme eines integrierten Messfühlers (29) aus einer oder mehreren Blechlagen (18), von denen zumindest ein Teil zumindest teilweise so strukturiert ist, dass deren Struktur den Wabenkörper (7) für ein Fluid durchströmbar macht, mit einer Identifikationseinheit (5) zur Identifizierung einer Blechlage (18) in Bezug auf ihre spätere Lage im Wabenköper (7), einem Speicher (11) zur Speicherung mindestens eines Lochrandes (13) und mindestens einer Lochposition (12) für jede einzelne Blechlage (18) in dem Wabenkörper (7), einer Locheinheit (9) mit einem Lochwerkzeug (4), gegebenenfalls Strukturier- und Reduktionswerkzeugen (14, 15) und einer Stapel- und Wickeleinheit (19), wobei Speicher (11) und Locheinheit (9) über Signalleitungen (10) zur Übertragung des mindestens einen Lochrands (13) und der mindestens einen Lochposition (12) verbunden sind.

12. Vorrichtung nach Anspruch 11, **dadurch gekennzeichnet, dass** die Lochpositionen (12) und/oder Lochränder (13) aus der Schnittfläche des Messfühlers (29) mit den Blechlagen (18) im gewickelten Zustand bestimmt sind.

13. Vorrichtung nach einem der Ansprüche 10 oder 11, **dadurch gekennzeichnet, dass** der Messfühler (29) einen kreisförmigen, ovalen oder mehreckigen, bevorzugt ovalen oder viereckigen, Querschnitt aufweist.

14. Vorrichtung nach einem der Ansprüche 10 bis 12, **dadurch gekennzeichnet, dass** das Lochwerkzeug (4) Mittel zur Erzeugung eines im wesentlichen ovalen Loches (23, 24) aufweist.

## Claims

1. A method for producing a honeycomb body (7) having a predetermined number (n) of sheet metal layers (18) from at least one supply roll (1), at least some of which are at least partially structured sheet metal layers (18) whose structure makes it possible for fluid to flow through the honeycomb body (7), with the honeycomb body (7) having in its interior a predetermined continuous free volume (25) for a measurement sensor (29), comprising the following steps:
a) selection of a section (6) of a sheet metal strip (2) from the supply roll (1) for a sheet metal layer (18) of appropriate size;
b) identification of the sheet metal layer (18) and reading of at least one associated hole position (12) and at least one associated hole edge (13) from a memory (11);
c) construction of at least one hole (23, 24) with the hole edge (13) in the sheet metal layer (18) at the at least one specified hole position (12) and if required structuring of at least a portion of the section (6);
d) if required, separation of the section (6) from the supply roll (1);
e) repetition of steps a) to d) until the predetermined number (n) of sheet metal layers (18) is reached;
f) if required, stacking the predetermined number of sheet metal layers (18) corresponding to the identification of the individual sheet metal layers (18);
g) if required repetition of steps a) to f) for the production of a multitude of stacks;
h) winding of the at least one sheet metal layer (18) or of the at least one sheet metal stack to form a honeycomb structure (20);
i) introduction of the honeycomb structure (20) into a jacket tube (21); and
j) introduction of the measurement sensor (29) at a predetermined position into the honeycomb body structure (20) and the jacket tube (21),
in which the steps b), c) and d) can be carried out in any desired sequence.

2. Method according to claim 1, **characterized in that** the at least one hole position (12) and the at least one hole edge (13) in the respective sheet metal layers (18) are chosen such that a continuous cavity is produced in the honeycomb body (7), the volume (25) of which corresponds essentially at least to the volume of the measurement sensor (29) introduced into the honeycomb body (7).

3. Method according to claim 2, **characterized in that** the dimensions of the at least one hole (23, 24) in one sheet metal layer (18) are larger by a predetermined tolerance value than the cross section of the measurement sensor (29) with the corresponding sheet metal layer (18).

4. Method according to one of the preceding claims, **characterized in that** the stored hole position (12) and/or the stored hole edge (13) is determined from the cross section of the measurement sensor (29) with the sheet metal layer (18) in the wound state.

5. Method according to one of the preceding claims, **characterized in that** the hole position (12) and/or the hole edge (13) are derived before storage from a mathematical model calculation.

6. Method according to one of claims 1 to 4, **characterized in that** the hole position (12) and/or the hole edge (13) are determined before storage on the basis of empirical values.

7. The method as claimed in one of the preceding claims, **characterized in that** the stored values for the hole position (12) and/or for the hole edge (13) are adapted on basis of the actual tolerance values between the measurement sensor (29) and the boundary of the free volume (25).

8. Method according to one of the preceding claims, **characterized in that** the holes (23, 24) are formed such that the cross section of the free volume (25) allows the introduction of a measurement sensor (29) having an essentially circular, oval or polygonal cross section, preferably an oval or quadric lateral cross section.

9. Method as claimed in claim 7, **characterized in that** the hole edge (13) is essentially oval.

10. Method according to one of the preceding claims, **characterized in that** a lambda probe or an HC sensor, preferably a lambda probe, is introduced as the measurement sensor (29).

11. Apparatus for producing a honeycomb body having a continuous free volume (25) for holding an integrated measurement sensor (29) comprising one or more sheet metal layers (18), at least some of which are at least partially structured such that their structure allows a fluid to flow through the honeycomb body (7), having an identification unit (5) for identification of a sheet metal layer (18) with respect to its later position in the honeycomb body (7), having a memory (11) for storage of at least one hole edge (13) and of at least one hole position (12) for each individual sheet metal layer (18) in the honeycomb body (7), with a perforation unit (9) with a perforation tool (4), if required structuring and reduction tools (14, 15), and a stacking and winding unit (19), wherein memory (11) and the perforation unit (9) are connected via signal lines (10) for the transmission of the at least hole edge (13) and of the at least one hole position (12).

12. Apparatus according to claim 11, **characterized in that** the hole positions (12) and/or hole edges (13) are determined from the cross section of the measurement sensor (29) with the sheet metal layers (18) in the wound state.

13. Apparatus as claimed in one of claims 10 or 11, **characterized in that** the measurement sensor (29) has a circular, oval or polygonal cross section, preferably an oval or quadric lateral cross section.

14. Apparatus as claimed in one of claims 10 to 12, **characterized in that** the perforation tool (4) has means for producing an essentially oval hole (23, 24).

## Revendications

1. Procédé de fabrication d'un corps en nids d'abeilles (7) avec un nombre (n) prédéterminé de couches de tôle (18) d'au moins un rouleau d'alimentation (1), dont au moins une partie sont des couches de tôle au moins partiellement structurées (18), qui grâce à leur structure rendent le corps en nids d'abeilles (7) traversable pour un fluide, dans quel cas le corps en nids d'abeilles (7) présente dans son intérieur un volume (25) prédéterminé libre cohérent pour un capteur (29), le procédé comportant le déroulement suivant :
a) choix d'un tronçon (6) d'une tôle en bande (2) du rouleau d'alimentation (1) pour une couche de tôle (18) de taille adéquate ;
b) identification de la couche de tôle (18) et lecture dans une mémoire (11) d'au moins une position de perforation (12) correspondante et d'au moins un bord de perforation (13) correpondant ;
c) réalisation d'au moins une perforation (23, 24) avec le bord de perforation (13) dans la couche de tôle (18) à l'au moins une position de perforation (12) respective et le cas échéant, structuration d'au moins une partie du tronçon (6) ;
d) le cas échéant, détacher le tronçon (6) du rouleau d'alimentation (1) ;
e) répéter l'étape a) à d) jusqu'à ce que le nombre prédéterminé (n) de couches de tôle (18) soit atteint ;
f) le cas échéant, empilage du nombre prédéterminé de couches de tôle (18) selon l'identification des couches de tôle (18) individuelles ;
g) le cas échéant, répéter les étapes a) à f) pour la fabrication de plusieurs piles ;
h) enrouler l'au moins une couche de tôle (18), respectivement l'au moins une pile de tôle, en une structure en nids d'abeilles (20) ;
i) introduire la structure en nids d'abeilles (20) dans un tube d'enveloppe (21) ; et
j) introduire le capteur (29) dans la structure en nids d'abeilles (20) et le tube d'enveloppe (21), dans une position prédéterminée.
les étapes b), c) et d) pouvant être effectuées dans un ordre quelconque.

2. Procédé selon la revendication 1, **caractérisé en ce que** l'au moins une position de perforation (12) et l'au moins un bord de perforation (13) dans les couches de tôle (18) respectives sont choisis de manière telle que dans le corps en nids d'abeilles (7) une cavité cohérente est créée, dont le volume (25) correspond sensiblement au moins au volume du capteur (29). introduit dans le corps en nids d'abeilles (7).

3. Procédé selon la revendication 2, **caractérisé en ce que** les dimensions de l'au moins une perforation (23, 24) dans une couche de tôle (18) sont d'une valeur de tolérance prédéterminée plus grandes que la face de coupe du capteur (29) avec la couche de tôle (18) respective.

4. Procédé selon l'une des revendications précédentes, **caractérisé en ce que** la position de perforation mémorisée (12) et/ou le bord de perforation mémorisé (13) sont déterminés à partir de la face de coupe du capteur (29) avec la couche de tôle (18) l'état enroulé.

5. Procédé selon l'une des revendications précédentes, **caractérisé en ce qu'**avant la mémorisation la position de perforation (12) et/ou le bord de perforation (13) sont dérivés d'un calcul type mathématique.

6. Procédé selon l'une des revendications 1 à 4, **caractérisé en ce que** la position de perforation (12) et/ou le bord de perforation (13) sont déterminés avant la mémorisation en raison de valeurs empiriques.

7. Procédé selon l'une des revendications précédentes, **caractérisé en ce que** les valeurs mémorisées pour la position de perforation (12) et/ou le bord de perforation (13) sont adaptées en raison des valeurs de tolérance réellement existantes entre le capteur (29) et la limitation du volume libre (25).

8. Procédé selon l'une des revendications précédentes, **caractérisé en ce que** les perforations (23, 24) sont formées de manière telle que la section transversale du volume libre (25) permet d'introduire un capteur (29) qui a une section transversale sensiblement circulaire, ovale ou à plusieurs angles, de préférence ovale ou quadrangulaire.

9. Procédé selon la revendication 7, **caractérisé en ce que** le bord de perforation (13) est sensiblement ovale.

10. Procédé selon l'une des revendications précédentes, **caractérisé en ce que** qu'en tant que capteur (29) on introduit une sonde lambda ou une sonde HC, de préférence une sonde lambda.

11. Dispositif pour fabriquer un corps en nids d'abeilles avec un volume (25) libre cohérant pour le logement d'un capteur intégré (29) d'une ou de plusieurs couches de tôle (18), dont au moins une partie est au moins partiellement structurée (18) de manière telle que leur structure rend le corps en nids d'abeilles (7) traversable pour un fluide, avec une unité d'identification (5) pour identifier une couche de tôle (18) quant à sa position ultérieure dans le corps en nids d'abeilles (7), une mémoire (11) pour mémoriser au moins un bord de perforation(13) et au moins une position de perforation (12) pour chaque couche de tôle individuelle (18) dans le corps en nids d'abeilles (7), une unité de perforation (9) avec un outil der perforation (4), le cas échéant, avec des outils de structuration et de réduction (14, 15) et une unité d'empilement et d'enroulement (19), dans quel cas la mémoire (11) et l'unité de perforation (9) sont reliées à l'intermédiaire de lignes de transmission de signaux (10) pour transmettre l'au moins un bord de perforation (13) et de l'au moins une position de perforation (12).

12. Dispositif selon la revendication 11, **caractérisé en ce que** les positions de perforation (12) et/ou les bords de perforation (13) sont déterminés à partir de la face de coupe du capteur (29) avec les couches de tôle (18) à l'état enroulé.

13. Dispositif selon l'une des revendications 10 ou 11, **caractérisé en ce que** le capteur (29) présente une section transversale circulaire, ovale ou à plusieurs angles, de préférence ovale ou quadrangulaire.

14. Dispositif selon l'une des revendications 10 à 12, **caractérisé en ce que** l'outil de perforation (4) a des moyens pour générer une perforation (23, 24) sensiblement ovale.
